(19) Europäisches Patentamt
European Patent Office
Office européen des brevets

(11) **EP 2 940 440 A1**

(12) **EUROPEAN PATENT APPLICATION**

(43) Date of publication:
**04.11.2015 Bulletin 2015/45**

(51) Int Cl.:
**G01H 1/00** (2006.01)  **B61K 9/04** (2006.01)
**G01M 15/00** (2006.01)  **G05B 23/02** (2006.01)

(21) Application number: **14166626.3**

(22) Date of filing: **30.04.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Bombardier Transportation GmbH 10785 Berlin (DE)**

(72) Inventors:
• **Häse, Dr. Peter 8610 Uster (CH)**

• **Rohrer, Daniel 8117 Fällanden (CH)**
• **Leine, Prof. Dr. Remco I. 8057 Zürich (CH)**

(74) Representative: **Cohausz & Florack Patent- & Rechtsanwälte Partnerschaftsgesellschaft mbB Bleichstraße 14 40211 Düsseldorf (DE)**

(54) **Identification of the presence of a potentially damaging resonant vibration state of a mechanical device**

(57) The present invention relates to a method for identifying presence of at least one potentially damaging resonant vibration state of a mechanical device, in particular, a component of a rail vehicle, comprising capturing at least one vibration signal representative of a current vibration state of the mechanical device (104), analyzing the at least one vibration signal (VS) for determining presence of at least one potentially damaging vibration component within the at least one vibration signal and for determining an amplitude information (AS) representative of an amplitude of the at least one potentially damaging vibration component, and comparing the amplitude information of the at least one potentially damaging vibration component to a threshold amplitude information previously determined for the least one potentially damaging vibration component to identify presence of the potentially damaging resonant vibration state. Analyzing the at least one vibration signal comprises using a phase-locked loop device (111.2) for identifying a frequency of a predominant vibration component within the at least one vibration signal.

Fig. 4

EP 2 940 440 A1

**Description**

BACKGROUND OF THE INVENTION

The present invention relates to a method for identifying presence of at least one potentially damaging resonant vibration state of a mechanical device, in particular, a component of a rail vehicle. The method comprises capturing at least one vibration signal representative of a current vibration state of said mechanical device and analyzing said at least one vibration signal for determining presence of at least one potentially damaging vibration component within said at least one vibration signal and for determining an amplitude information representative of an amplitude of said at least one potentially damaging vibration component. The method further comprises comparing said amplitude information of said at least one potentially damaging vibration component to a threshold amplitude information previously determined for said at least one potentially damaging vibration component to identify presence of said potentially damaging resonant vibration state. The invention also relates to a corresponding control arrangement adapted to execute the method according to the present invention as well as a mechanical arrangement, in particular a vehicle implementing the method according to the present invention.

The control system of the drive units of modern rail vehicles, in many cases, is configured to achieve operation at least close to the traction maximum available at the current operating conditions and the current environmental conditions. While such operation close to the traction maximum is desired for many reasons, it has the disadvantage that certain mechanical components of the drivetrain of the vehicle tend to exhibit self induced resonant vibration behavior under these operating conditions. Such resonance effects typically occur in drivetrains comprising electric motors fed by corresponding traction converter devices. They may however also occur with other drive concepts, for example, drivetrains comprising combustion engines, such as diesel motors, providing traction via hydraulic torque transmission devices. Here, such resonance effects may typically occur during braking operation due to the specific design of the so called retarder component.

A typical resonant vibration scenario is the self induced resonant vibration between the rotor of the electric drive motor and the wheel unit (e.g. a single wheel or a wheelset) driven by the electric motor. Such a scenario is often found within drive units comprising tangentially resilient drive wheels or clutch devices (as it is often the case with drivetrains comprising hollow drive shafts).

With further resonant vibration scenarios the wheels of a wheelset may oscillate with respect to each other, leading among others to an increased torsional load on the wheelset shaft connecting the two wheels. In such a scenario it may, in particular, be the case that only one of the wheels executes such an oscillation, while the other wheel remains in its setpoint state (e.g. rotates at a constant setpoint speed). A further resonant vibration scenario is the oscillation of a whole motor and gear unit with respect to the wheelset on which the motor and gear unit is (at least partially) supported.

Yet a further resonant vibration scenario is the mutual oscillation of two separate drive units (each including a motor unit, a gear unit and a wheel unit), which are fed by the same traction converter as it is described, for example, in EP 1 473 485 A2 (the entire disclosure of which is incorporated herein by reference).

It will be appreciated, however, that also many other mechanical arrangements may be subject to such resonant vibration phenomena. In particular, with certain electric motors, failure of certain components within the motor (e.g. due to a short circuit) may lead to asymmetric conditions within the motor leading to a pulsating torque generated by the motor, which also may cause such forced resonant vibration.

Such self induced resonant vibration, irrespective of its cause, obviously leads to increased stress within the respective components which in turn leads to increased wear and, ultimately, a need for shorter maintenance intervals, eventual early replacement of these components or more robust and, generally, heavier or more expensive design of these components. A further drawback of such resonant vibration, obviously, is the increased sound emission that goes along with it.

It has turned out that even highly developed methods for controlling the drive units of such vehicles as they are known, for example, from EP 0 195 249 B1, DE 44 35 775 A1, and DE 39 29 497 C2 may not sufficiently suppressed such resonant vibration effects.

Hence, in order to counteract these disadvantages, it is known to monitor the vibration behavior of the potentially affected components using suitable sensors capturing appropriate vibration signals representative of the current vibration state of the respective components. The vibration signals are then analyzed to identify the presence of such a potentially damaging resonant vibration state and to take appropriate countermeasures in case presence of a potentially damaging resonant vibration state is detected.

The mechanical arrangement of interest (e.g. a wheelset) typically has one or more resonant frequencies, which are well-defined by its mechanical design parameters (masses, rigidities, inertial moments etc). Vibration of the arrangement at one of these resonant frequencies, obviously, is a candidate for such a potentially damaging, self induced resonant vibration state. Hence, monitoring is focused to these known resonant frequencies in order to rapidly initiate countermeasures as soon as such resonant vibration is detected.

To this end, typically, analyzing devices are used, which comprise a series of suitable filters specifically tailored to the resonant frequency in question. Such filter arrangements, typically, comprise a bandpass filter matched to the resonant frequency of interest as well as an amplitude detector providing an amplitude information representative of the amplitude of the detected vibration. This amplitude information is then compared to an amplitude threshold information previously identified for the mechanical arrangement of interest (as a function of the damaging mechanism associated with this specific resonant frequency of the arrangement) in order to determine if this threshold is exceeded, such that countermeasures are necessary to avoid damage to the arrangement.

One problem in this context is that, typically, these potentially damaging resonant vibration situations (while nevertheless, having a damaging effect) only occur over comparatively short periods of time which lie the order of a few hundredths of a second. Hence, rapid detection of such a resonant vibration situation and rapid reaction is crucial.

An apparent drawback of the monitoring concept as outlined above is that, in order to obtain a sufficiently rapid detection of such a resonant vibration situation and an appropriately rapid reaction, for each resonant frequency of interest a separate filter arrangement has to be set up and optimized to a comparatively narrow matching frequency band.

A further drawback of this monitoring concept is that the respective resonant frequency of the mechanical arrangement in question is subject to alterations over time due to wear and/or aging of the components of the arrangement. Hence, for example, in a wheelset wear of the wheels causes a reduction in the mass and inertia of the wheels, which typically shifts the resonant frequency towards higher frequencies. Similar effects may be encountered due to aging of rubber components which typically leads to an increased rigidity of the respective component.

Hence, conventionally, such known monitoring systems are only optimized to an intermediate state of the mechanical arrangement located between the new (i.e. unworn) state of the arrangement and the (still admissible) maximally worn state of the arrangement. Consequently, optimum detection and reaction to such resonant vibration situations is only achieved close to this intermediate state, whereas in an initial use period as well as in a terminal use period of the arrangement only suboptimal detection and reaction may be achieved.

## SUMMARY OF THE INVENTION

The present invention is therefore based on the object of providing a method for identifying presence of potentially damaging resonant vibration states of a mechanical device and a corresponding control arrangement, which does not have the aforementioned drawbacks or has those drawbacks only to lesser extent and, in particular, allows simple, rapid and reliable identification of potentially damaging resonant vibration states over the entire lifetime of the mechanical device.

The present invention achieves this object starting from a method according to the preamble of claim 1 by the features disclosed in the characterising part of claim 1. It also achieves this object starting from a control arrangement according to the preamble of claim 10 by the features disclosed in the characterising part of claim 10.

The present invention is based on the technical teaching that simple, rapid and reliable identification of potentially damaging resonant vibration states over the entire lifetime of the mechanical device may be achieved if a so-called phase locked loop (PLL) device, as it is generally and mainly known from telecommunication applications, is used for the identification of the frequency of a predominant vibration component within the vibration signal captured.

Such a solution has the great advantage that, unlike in the known systems, such a PLL device may provide identification of the frequency of the predominant vibration component within very few periods of the vibration, in some cases even within less than one single period of the vibration.

A further advantage lies within the fact that such a PLL device has not to be optimized for a very narrow frequency band. Rather, such a PLL device has a fairly broad lock-on frequency range, i.e. the ability to lock onto frequencies of a fairly broad frequency range, such that optimum and rapid reaction to resonant vibration state may be achieved over the entire lifetime of the mechanical arrangement.

The broad lock-on frequency range of the PLL device has the further advantage that the entire arrangement may be used to monitor either different resonant frequencies of the same mechanical components or arrangements within the mechanical device or to monitor different mechanical components or arrangements within the mechanical device which have different resonant frequencies

Hence, according to one aspect, the present invention relates to a method for identifying presence of at least one potentially damaging resonant vibration state of a mechanical device, in particular, a component of a rail vehicle, comprising capturing at least one vibration signal representative of a current vibration state of the mechanical device, analyzing the at least one vibration signal for determining presence of at least one potentially damaging vibration component within the at least one vibration signal and for determining an amplitude information representative an amplitude of the at least one potentially damaging vibration component, and comparing the amplitude information of the at least one potentially damaging vibration component to a threshold amplitude information previously determined for the least one potentially damaging vibration component to identify presence of the potentially damaging resonant vibration state. Analyzing the at least one vibration signal comprises using a phase-locked loop device for identifying a frequency of a predominant vibration component within the at least one vibration signal.

With certain embodiments of the invention, the frequency of the predominant vibration component is compared with at least one candidate damaging resonant frequency previously determined for the mechanical device to identify if the predominant vibration component represents the at least one potentially damaging vibration component. Hence, it may be provided that further analysis of the vibration signal only is carried out if the vibration signal qualifies as such a potentially damaging vibration component.

With certain embodiments of the invention, at least in case of qualification of the predominant vibration component as the at least one potentially damaging vibration component, an amplitude information of the predominant vibration component is compared with the threshold amplitude information (selected as a function of the to frequency of the predominant vibration component) to identify presence of the potentially damaging resonant vibration state.

It will be appreciated that, with certain embodiments of the invention, it may be provided that such a further analysis is carried out for any vibration signal and that qualification as a damaging vibration component only is carried out via the comparison of the amplitude information of the predominant vibration component with the threshold amplitude information. In other words, at a sufficiently fine resolution and in an appropriate frequency range of interest, a threshold amplitude information may be stored for any frequency within this range of interest. The corresponding threshold amplitude information is then selected as a function of the predominant vibration component and used in the comparison to identify presence of a potentially damaging resonant vibration state.

It will be appreciated that, basically, one single threshold amplitude information may be provided for all potential damaging vibration components, i.e. all potentially damaging resonant vibration states, to be monitored. Preferably, however, the threshold amplitude information is selected as a function of the at least one potentially damaging vibration component. Hence, monitoring of potentially damaging resonant vibration states and appropriate subsequent reaction may be specifically tailored to the respective potentially damaging resonant vibration state.

It will be appreciated that the threshold amplitude information may be selected as a function of the predominant vibration component identified. Particularly rapid reaction, however, is achieved in variants where the threshold amplitude information is selected as a function of the at least one candidate damaging resonant frequency used in the identification process.

The phase-locked loop device may basically be designed in any suitable way to achieve rapid lock-on to the predominant vibration component of the vibration signal. With preferred embodiments, the phase-locked loop device comprises a phase detector device, a loop filter device and an adjustable oscillator device. The adjustable oscillator device, as a function of an oscillator input signal, provides at least one oscillator output signal having a defined oscillator output frequency. The at least one vibration signal and the at least one oscillator output signal are input into the phase detector. The phase detector, as a function of the at least one vibration signal and the at least one oscillator output signal, generates a phase detector output signal, the phase detector output signal being representative of a phase difference between the at least one vibration signal and the at least one oscillator output signal. The phase detector output signal is then input into the loop filter device. The loop filter device, as a function of the phase detector output signal, generates a loop filter output signal input into the oscillator device as the oscillator input signal to reduce the phase difference between the at least one vibration signal and the at least one oscillator output signal. Finally, a frequency of the oscillator output signal, after the phase difference has fallen below a predeterminable phase difference threshold, is used as the frequency of the predominant vibration component. It will be appreciated that the phase difference threshold may be of any suitable magnitude, in particular depending on the required accuracy of the entire process. Typically, the phase difference threshold is substantially zero.

With preferred embodiments of the invention, the phase-locked loop device is configured as a quadrature phase-locked loop (QPLL) device as it is generally known, for example, from WO 02/091578 A2 (the entire disclosure of which is incorporated herein by reference).

Such a QPLL device has the great advantage that, due to its specific design, it has a virtually unlimited lock-on frequency range, such that it enables monitoring of virtually any desired potentially damaging resonant frequency and vibration state, respectively.

In such a variant with a QPLL device, the adjustable oscillator device, as a function of the oscillator input signal, provides at least a first oscillator output signal and a second oscillator output signal, the first oscillator output signal and the second oscillator output signal having the defined oscillator output frequency and a defined phase shift, in particular a phase shift of a quarter period. The at least one vibration signal, the first oscillator output signal and the second oscillator output signal are input into the phase detector device. The phase detector device, as a function of the at least one vibration signal, the first oscillator output signal and the second oscillator output signal, generates the phase detector output signal representative of the phase difference between the at least one vibration signal and the at least one oscillator output signal and being input into the loop filter device.

Preferably, the phase detector device has a component that generates, as a function of the at least one vibration signal, the first oscillator output signal and the second oscillator output signal, an amplitude signal representative of the amplitude of the at least one potentially damaging vibration component. This signal may then be used to obtain the amplitude information to be compared to the threshold amplitude information.

The phase shift in the first oscillator output signal and the second oscillator output signal may basically be generated in any suitable way as long as it allows sufficiently rapid operation-With certain embodiments of the invention, the adjustable oscillator device generates an angular speed oscillator signal and integrates the angular speed signal, the adjustable oscillator device then applies a sine function to the integrated angular speed signal to obtain the first oscillator output signal, and the adjustable oscillator device applies a cosine function to the integrated angular speed signal to obtain the second oscillator output signal having the phase shift to the first oscillator output signal.

Very rapid generation of the first and second oscillator output signal is achieved in a variant where the adjustable oscillator device generates an angular speed oscillator signal input into a feedback oscillator circuit of the adjustable oscillator device. The feedback oscillator circuit, as a function of the angular speed oscillator signal, generates the first oscillator output signal and the second oscillator output signal having the phase shift to the first oscillator output signal.

Particularly rapid lock-on of the PLL device is achieved if an initial frequency of the oscillator output signal is located as close as possible to the respective potentially damaging resonant frequency to be monitored. Hence, preferably, a predetermined frequency previously identified for the mechanical device is used as an initial frequency of the oscillator output signal. Preferably, the at least one candidate damaging resonant frequency is set as the initial frequency of the oscillator output signal.

It will be appreciated that, under certain circumstances, in particular with more than one candidate damaging resonant frequency, the initial frequency may eventually be varied periodically (according to a given scheme or randomly). With other embodiments of the invention, however, separate detection via separate phase detector devices may be provided for separate candidate damaging resonant frequencies. In these cases, eventual pre-filtering of the vibration signal may be tuned to the respective candidate damaging resonant frequency or specific candidate frequency ranges. In any case, the initial conditions (e.g. eventual pre-filtering, initial oscillator frequency etc.) can be optimized or tuned to the specific candidate frequency or candidate frequency range in order to reduce time required for lock-on or synchronization, respectively.

Preferably, the predominant vibration component is identified as a potentially damaging vibration component if a frequency difference between the frequency of the predominant vibration component and the at least one candidate damaging resonant frequency is below a predeterminable frequency difference threshold. In this case, the frequency of the predominant vibration component is subsequently set as the at least one candidate damaging resonant frequency. In a very simple manner, such an approach conveys the ability of the system to account for and hollow, respectively, alterations of the respective potentially damaging resonant frequency, which may occur over time, e.g. due to wear or ageing effects of the components of the mechanical device.

The frequency difference threshold basically may be any suitable difference (or acceptable frequency error) which allows proper assignment of the current predominant vibration component to the respective potentially damaging resonant vibration frequency. In cases where more than one potentially damaging resonant vibration frequencies are located rather close to each other, the frequency difference threshold is selected correspondingly smaller. In these cases, for example, the frequency difference threshold may be selected as less than 50% (e.g. less than 40%, preferably less than 300%, more preferably 5% to 20%) of the frequency difference between the two neighboring potentially damaging resonant vibration frequencies. Preferably, the predeterminable frequency difference threshold is 10%, preferably 5%, more preferably 2%, of the at least one candidate damaging resonant frequency.

It will be appreciated that, basically, the vibration signal may be directly fed to the PLL device. This particularly applies if the vibration signal itself, under normal operating conditions, is expected to be within a suitable frequency band. Preferably, however, the vibration signal is filtered by an initial filter device prior to being fed to the phase-locked loop device.

The initial filter device may be a conventional band pass filter device, the cut-off frequencies of which are selected as a function of the at least one candidate damaging resonant frequency, such that they do not influence the dynamics of the subsequent identification of the target predominant vibration component of the vibration signal. The initial filter device may be of any suitable complexity. With preferred, simple embodiments of the invention, the initial filter device is a band pass filter device of first or second order. Particularly good results in rail vehicle environments, in particular in locomotive environments, (in particular in resonant vibration scenarios between the wheels of a wheelset) may be achieved with certain preferred embodiments of the invention where the initial filter device is a band pass filter device having a lower cut-off frequency of less than 35 Hz, preferably 10Hz to 25 Hz, more preferably 15 Hz to 20 Hz, and/or having an upper cut-off frequency of above 100 Hz, preferably above 150 Hz, more preferably 200 Hz to 250 Hz.

It will be appreciated that, with further embodiments of the invention, a smallest one and a largest one of the potentially damaging resonant vibration frequencies define a frequency band of interest and the initial filter device is a band pass filter device having a lower cut-off frequency of less than 75%, preferably less than 60%, more preferably 40% to 50%, of the smallest potentially damaging resonant vibration frequency, and/or having an upper cut-off frequency of above 150%, preferably above 200%, more preferably 250% to 400%, of the largest pratentially damaging resonant vibration frequency.

The loop filter may be of any suitable type providing an appropriate oscillator input signal for the oscillator device. With certain embodiments of the invention, the loop filter device is an integrator device. Preferably, the loop filter device provides a loop filter output signal representative of a phase difference between the vibration signal and an oscillator output of an adjustable oscillator device of the phase-locked loop device.

The respective vibration signal may be captured in any suitable way providing reliable information on the actual vibration state of the device. Preferably, the at least one vibration signal is captured using a motion sensor device, in particular, an acceleration sensor device and/or a rotational speed sensor device, and/or a stress sensor device and/or a strain sensor device.

With further preferred embodiments of the invention, the QPLL device is configured as a modified quadrature phase-locked loop device using a coordinate transformation eliminating the use of trigonometric functions and/or phase information. The modification is preferably achieved using a coordinate transformation as follows:

$$z(t) := k_s(t) \cdot \cos \Phi(t) - k_c(t) \cdot \sin \Phi(t),$$

wherein $\phi(t)$ is a rotating angle information of a component of interest of said mechanical device. Applying such a coordinate transformation to such a QPLL device has the great advantage that the need for operating resources is greatly reduced, since neither trigonometric functions nor phase information are needed any more (compared to a typical QPLL device using trigonometric functions and phase information). Hence, advantageously, a simpler controller layout with more rapid reaction to resonant vibration states may be achieved.

It will be appreciated that the present invention may be applied in the context of arbitrary mechanical devices that may undergo one or more such potentially damaging resonant vibration states at given resonant frequencies. Particularly favourable results may be achieved in configurations with electric drive motors fed by converters, since these are to some extent prone to such self-excited resonant vibration. However, such potentially damaging resonant vibration states may also occur in arrangements where a combustion motor (such as a diesel motor) drives one or more traction wheel units via a corresponding hydraulic torque transmission device (e.g. a so called retarder in rail vehicle applications).

Hence, with certain embodiments of the invention, the mechanical device comprises a drive motor and a wheel unit driven by the drive motor, the vibration signal being representative of a relative vibration between a rotor of the drive motor and the wheel unit. In these cases, resonant vibration may, for example, be hazardous to the components of the torque transmission (such as shafts, gears etc). Such resonant vibration may, in particular, develop in drive trains including torsionally elastic sections, such as e.g. tangentially spring-mounted gear wheels, tangentially spring-mounted clutches or hollow shafts (such as e.g. quill tubes).

Furthermore, with certain embodiments of the invention, the mechanical device comprises a drive motor and a wheel unit driven by the drive motor, the vibration signal being representative of a relative vibration between the drive motor and the wheel unit. In these cases, resonant vibration may, for example, be hazardous to the components of the torque transmission (such as shafts, gears etc) as well as to the torque support components and/or suspension components of the motor.

Furthermore, with certain embodiments of the invention, the mechanical device comprises a wheel unit having two wheels mechanically coupled to each other by a coupling device, in particular, a wheel unit shaft, the vibration signal being representative of a relative vibration between the wheels, in particular, a torsional vibration of the wheel unit shaft.

Furthermore, with certain embodiments of the invention, the mechanical device comprises a first drive unit and a second drive unit electrically driven by a common converter unit, the vibration signal being representative of a relative vibration between the first drive unit and the second drive unit.

Furthermore, with certain embodiments of the invention, the mechanical device comprises an electric drive motor, the vibration signal being representative of a vibration caused by a pulsating torque generated by the drive motor, in particular, as a result of a short-circuited component of the drive motor.

Such potentially damaging vibration may, in particular, develop in permanent magnet motors where short-circuited electric components lead to such a pulsating torque characteristic. Here, the potentially damaging resonant frequency (of the potentially damaging resonant vibration state) in the sense of the present invention is the characteristic frequency of the pulsating torque (or a harmonic thereof), which in turn is a function of the rotating speed of the motor. Detection of such a potentially damaging resonant vibration state may, in particular, be used to detect such short-circuiting situations in such electric motors.

The present invention further relates to a method for reacting to a presence of at least one potentially damaging resonant vibration state of a mechanical device, in particular, a component of a rail vehicle, comprising identifying presence of the at least one potentially damaging resonant vibration state of the mechanical device using a method according to the invention, and counteracting the at least one potentially damaging resonant vibration state.

Counteracting the potentially damaging resonant vibration state may take place in any suitable and appropriate way, in particular, as a function of the specific damaging resonant vibration state and its circumstances. In particular, any action leading to a noticeable and sufficient reduction of the amplitude of the potentially damaging vibration component may be taken.

In many cases, counteracting the at least one potentially damaging resonant vibration state preferably comprises reducing a torque of a drive motor driving the mechanical device. In addition or as an alternative, a traction creepage (sometimes also referred to as traction slip) and/or a traction force between a drive unit forming the mechanical device and a track contacted by the drive unit may be reduced in the course of this counteracting process.

According to a further aspect, the present invention further relates to a corresponding control arrangement for identifying presence of at least one potentially damaging resonant vibration state of a mechanical device, in particular, a component of a rail vehicle, comprising a capturing device and an analyzing device. The capturing device is configured to capture at least one vibration signal representative of a current vibration state of the mechanical device. The analyzing device is connected to the capturing device and is configured to analyze the at least one vibration signal for determining presence of at least one potentially damaging vibration component within the at least one vibration signal. The analyzing device is further configured to determine an amplitude information representative an amplitude of the at least one potentially damaging vibration component. Furthermore, the analyzing device is configured to compare the amplitude information of the at least one potentially damaging vibration component to a threshold amplitude information previously determined for the least one potentially damaging vibration component to identify presence of the potentially damaging resonant vibration state. The analyzing device, for analyzing the at least one vibration signal, comprises a phase-locked loop device for identifying a frequency of a predominant vibration component within the at least one vibration signal.

The present invention further relates to a mechanical arrangement, in particular, a vehicle, preferably a rail vehicle, comprising a mechanical device and a control arrangement according to the invention.

With such a control arrangement and such a mechanical arrangement the advantages and variants as outlined above in the context of the methods according to the invention may be achieved to the same extent. Hence, reference is merely made here to the explanations given above in this context.

Further embodiments of the present invention will become apparent from the dependent claims and the following description of preferred embodiments which refers to the appended figures.

BRIEF DESCRIPTION OF THE DRAWINGS

Figure 1      is a schematic view of a preferred embodiment of a rail vehicle according to the invention with a preferred embodiment of a control arrangement according to the invention which is configured to execute preferred embodiments of the methods according to the invention.

Figure 2      is a top view of a running gear of the rail vehicle of Figure 1.

Figure 3      is a block diagram of a part of the control arrangement of the rail vehicle of Figure 1.

Figure 4      is a block diagram of a part of the control arrangement of the rail vehicle of Figure 1.

Figure 5      is a more detailed block diagram of the control arrangement of Figure 4 (see Figure 7 for a legend).

Figure 6      is a block diagram of a part of a further preferred embodiment of the control arrangement according to the invention which may be used in the rail vehicle of Figure 1 (see Figure 7 for a legend).

Figure 7      is a block diagram of a part of a further preferred embodiment of the control arrangement according to the invention which may be used in the rail vehicle of Figure 1.

DETAILED DESCRIPTION OF THE INVENTION

First Embodiment

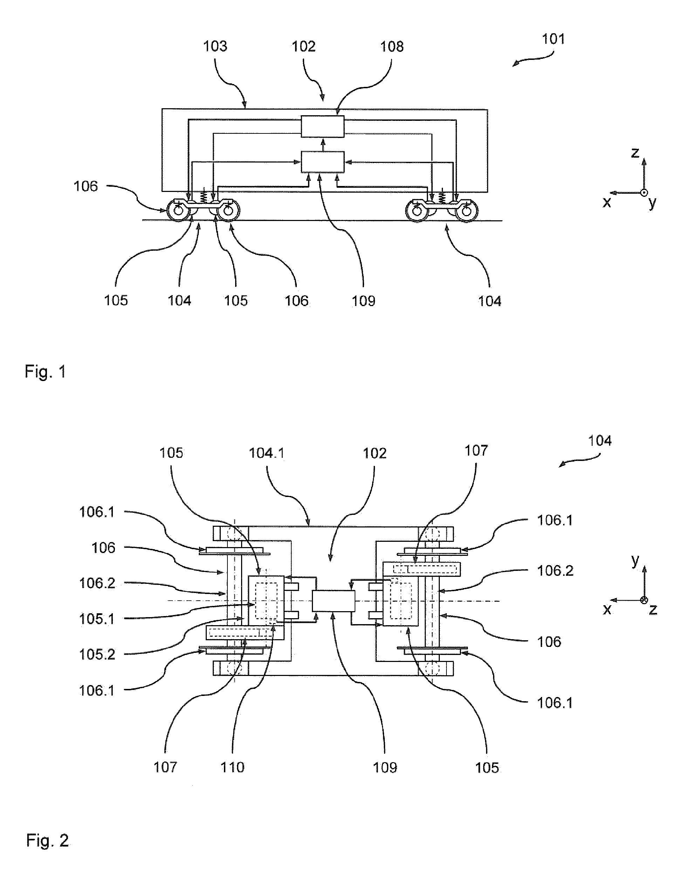

In the following, a first preferred embodiment of a mechanical arrangement according to the present invention in the form rail vehicle 101 with a preferred exemplary embodiment of a control arrangement 102 according to the invention configured to execute preferred embodiments of the methods according to the invention will be described with reference to Figure 1 to 5.

The rail vehicle 101 comprises a wagon body 103 supported on two running gears in the form of bogies 104.

7

A traction system of the vehicle 101 comprises a plurality of electric motors 105 each suspended to a bogie frame 104.1 and driving an associated wheelset 106 of the bogie 104 via a gearing unit 107. The respective motor 105 is fed by a traction converter device 108 controlled by the control arrangement 102 as will be explained in greater detail in the following with reference to one of the motors 105. It will be appreciated that all other motors 105, typically, are driven the same way. It may, however, also be the case that different drive or control concepts are used for individual motors 105.

The control arrangement 102 comprises a central control unit 109 controlling, among others, the traction converter device 108 to feed the electric motors 105. The traction control provided by the control arrangement 102 is configured to achieve, if necessary, operation at least close to the adhesion (or traction) maximum available at the current operating conditions and the current environmental conditions. While such operation close to the traction maximum is desired for many reasons, it has the disadvantage that certain mechanical arrangements or components of the drive train of the vehicle 101 tend to exhibit self induced resonant vibration behavior under these operating conditions.

A typical resonant vibration scenario is the self induced resonant vibration between the rotor 105.1 of the motor 105 and the associated wheelset 106 as one mechanical arrangement in the sense of the invention. A further resonant vibration scenario is that the wheels 106.1 of the wheelset 106, as a further mechanical arrangement in the sense of the invention, may oscillate with respect to each other about the wheelset axis, leading among others to an increased torsional load on the wheelset shaft 106.2 connecting the two wheels 106.1. A further resonant vibration scenario is the oscillation of the whole motor 105 and gearing unit 107 with respect to the wheelset 106 on which the motor 105 and gearing unit 107 is (at least partially) supported, as a further mechanical arrangement in the sense of the invention. Yet a further resonant vibration scenario is the mutual oscillation of the individual drive units (including a motor unit 105, a gearing unit 107 and a wheelset 106) fed by the traction converter 108, together forming yet a further mechanical arrangement in the sense of the invention.

As outlined initially, such self induced resonant vibration, irrespective of its cause, obviously leads to increased stress within the respective components which in turn leads to increased wear and, ultimately, a need for shorter maintenance intervals, eventual early replacement of these components or more robust and, generally, heavier or more expensive design of these components. A further drawback of such resonant vibration, obviously, is the increased sound emission that goes along with it.

To at least reduce the extent or impact such self induced resonant vibration, the control arrangement 102 is configured to identify and subsequently counteract presence of at least one potentially damaging resonant vibration state of at least one of the mechanical arrangements as outlined above. This will be described in the following, by way of example, in the context of the resonant vibration of the wheels 106.1 of the wheelset 106 oscillating with respect to each other about the wheelset axis.

To this end, the control arrangement 102 comprises a capturing device in the form of an encoder 110 of the motor 105 and an analyzing device 111. The central control unit 109 receives, among others, a rotational speed signal RS from encoder 110 forming a rotational speed sensor of the motor 105. This rotational speed signal RS is representative of the relative rotational speed between a rotor 105.1 and a stator 105.2 of the motor 105.

The rotational speed signal RS, due to the mechanical coupling between the rotor 105.1 and the wheelset 106 (via the gearing unit 107), among others represents a vibration signal VS representative of a current vibration state of the wheelset 106.

The analyzing device 111 is connected to the encoder 110 and receives the vibration signal VS. The analyzing device 111 is further configured to analyze the vibration signal VS for determining presence of at least one potentially damaging vibration component within the vibration signal VS. To this end, the analyzing device 111 comprises an initial filter device 111.1, a phase-locked loop device 111.2 and a comparison device 111.3.

The initial filter device 111.1 may be a conventional band pass filter device, the cut-off frequencies of which are selected as a function of one or more candidate damaging resonant frequencies to be monitored by the control arrangement 102, such that they do not influence the dynamics of the subsequent identification of any target predominant vibration component of the vibration signal VS = u(t) to be monitored.

In the present example, the initial filter device 111.1 is a simple band pass filter device of first or second order. Particularly good results may be achieved where the initial filter device 111.1 is a band pass filter device having a lower cut-off frequency of less than 35 Hz, preferably 10 Hz to 25 Hz, more preferably 15 Hz to 20 Hz, and/or having an upper cut-off frequency of above 100 Hz, preferably above 150 Hz, more preferably 200 Hz to 250 Hz.

In a scenario where the rail vehicle 101 is a locomotive and the resonant vibration scenario between the wheels 106.1 of the wheelset 106 is of interest, the wheelset 106 typically defines, for example, a smallest potentially damaging resonant vibration frequency of 45 Hz and a largest potentially damaging resonant vibration frequency of 55 Hz, i.e. a frequency band of interest of 45 Hz to 55 Hz. The initial filter device 111.1 may be a band pass filter device having a lower cut-off frequency of 20 Hz (i.e. about 44% of the smallest potentially damaging resonant vibration frequency) and an upper cut-off frequency of 200 Hz (i.e. about 366% of the largest potentially damaging resonant vibration frequency).

In a scenario where the rail vehicle 101 is a so called electrical multiple unit (EMU) and, again, the resonant vibration scenario between the wheels 106.1 of the wheelset 106 is of interest, the wheelset 106 typically defines, for example, a smallest potentially damaging resonant vibration frequency of 85 Hz and a largest potentially damaging resonant vibration frequency of 110 Hz., i.e. a frequency band of interest of 85 Hz to 110 Hz. The initial filter device 111.1 may be a band pass filter device having a lower cut-off frequency of 70 Hz (i.e. about 82% of the smallest potentially damaging resonant vibration frequency) and an upper cut-off frequency of 200 Hz (i.e. about 182% of the largest potentially damaging resonant vibration frequency).

The phase-locked loop device 111.2, in turn, receives the vibration signal VS (filtered by the initial filter device 111.1) and is configured to identify a frequency and an amplitude of a predominant vibration component PVC within the vibration signal VS. To this end, in the present embodiment, the phase-locked loop device 111.2 is configured as a quadrature phase-locked loop (QPLL) device as it is generally known, for example, from WO 02/091578 A2.

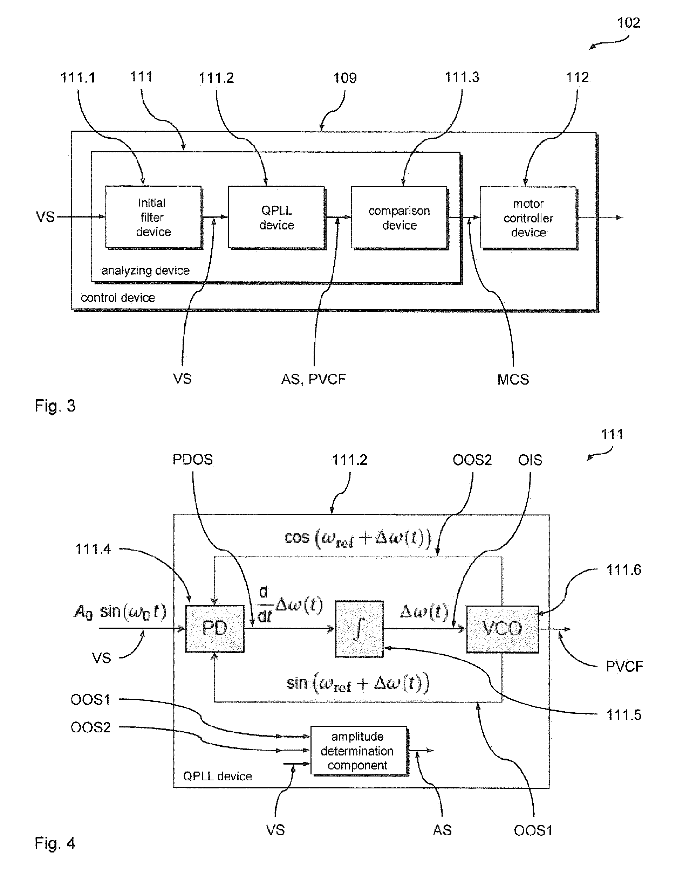

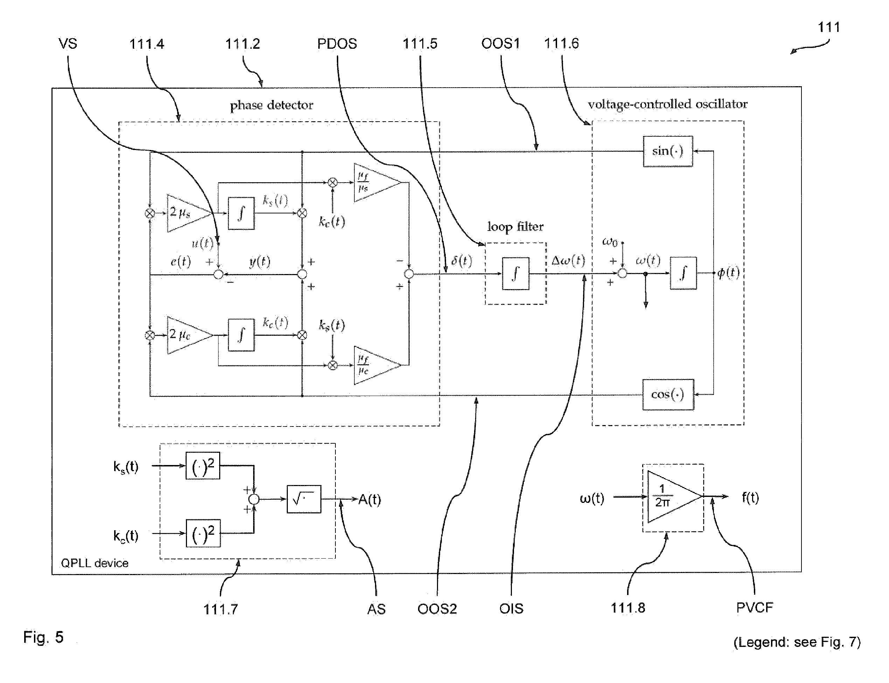

As can be seen from Figure 4 and 5, the phase-locked loop device 111.2 comprises a phase detector device (PD) 111.4, a loop filter device 111.5 and an adjustable oscillator device in the form of a voltage controlled oscillator (VCO) 111.6.

The adjustable oscillator device 111.6, as a function of an oscillator input signal OIS, provides two orthogonal oscillator output signals OOS1, OOS2 having the same defined oscillator output frequency OOF and a defined phase shift PS of a quarter period (i.e. 90° or $\pi/2$, respectively). As can be seen from Figure 5, the following applies:

$$OOS1 = \sin \Phi(t), \qquad\qquad (1)$$

$$OOS2 = \cos \Phi(t). \qquad\qquad (2)$$

The vibration signal VS and the oscillator output signals OOS1, OOS2 are input into the phase detector 111.4.

The phase detector 111.4, as a function of the vibration signal VS and the oscillator output signals OOS1, OOS2, generates a phase detector output signal PDOS, the phase detector output signal PDOS being representative of a phase difference PDIFT between the vibration signal VS and the oscillator output signals OOS1, OOS2. The phase detector output signal PDOS is then input into the loop filter device 111.5.

The loop filter device 111.5, in the present example, is an integrator device and generates, as a function of the phase detector output signal PDOS, a loop filter output signal LFOS that is representative of a phase difference PDIF between the vibration signal VS and the oscillator output of the oscillator device 111.6. The loop filter output signal LFOS is input into the oscillator device 111.6 as the oscillator input signal OIS to reduce the respective phase difference PDIF between the vibration signal VS and the oscillator output signal OOS1 or OOS2, respectively.

To this end, the phase detector 111.4, as can be seen from Figure 5, generates a comparison signal y(t), which calculates as:

$$y(t) = k_s(t) \cdot \sin \Phi(t) + k_c(t) \cdot \cos \Phi(t) = \sqrt{k_s^2(t) + k_c^2(t)} \cdot \sin\left[ \Phi(t) + \arctan\left( \frac{k_c(t)}{k_s(t)} \right) \right], \qquad (3)$$

and calculates an error signal e(t) from the comparison signal y(t) and the vibration signal VS = u(t) as:

$$e(t) = u(t) - y(t). \qquad\qquad (4)$$

Furthermore, as can be seen from Figure 5, the phase-locked loop device 111.2 uses the following set of differential equations in this process:

$$\dot{k}_s(t) = 2\mu_s \cdot e(t) \cdot \sin \Phi(t), \qquad (5)$$

$$\dot{k}_c(t) = 2\mu_c \cdot e(t) \cdot \cos \Phi(t), \qquad (6)$$

$$\delta(t) = \dot{\Delta\omega}(t) = 2\mu_f \cdot e(t) \cdot \left[ k_s(t) \cdot \cos \Phi(t) - k_c(t) \cdot \sin \Phi(t) \right], \qquad (7)$$

$$\dot{\Phi}(t) = \omega(t), \qquad (8)$$

with $\mu_s$, $\mu_c$ and $\mu_f$ being tuning parameters specifically tuned to the respective mechanical system and w(t) being the angular speed used by the of the voltage controlled oscillator (VCO) 111.6.

Finally, at a certain point in time, the respective phase difference PDIF has fallen below a predeterminable phase difference threshold PDIFT, which means that the QPLL device 111.2 is considered to have locked-on to the predominant vibration component PVC within the vibration signal VS. Typically, the phase difference threshold PDIFT is substantially zero, i.e. lock-on of the QPLL device 111.2 is only considered given at the point in time when the complete match between the vibration signal VS and the comparison signal y(t) (obtained according to equation 3) is achieved.

It will be appreciated that, to accelerate processing (i.e. achieve an early "lock-on" decision), the phase difference threshold PDIFT may also be of any suitable magnitude other than zero, which, in particular, depends on the required accuracy of the entire process (e.g. the required frequency resolution to be able to identify and differentiate individual potentially damaging resonant frequencies PDRF, which, for example, require different reaction). In other words, the error introduced by an early "lock-on" decision must be small enough to still allow proper potentially damaging resonant frequency identification.

The phase difference threshold PDIFT basically may be any suitable difference or acceptable phase/frequency error, which allows proper later assignment of the current predominant vibration component PVC to a potentially damaging resonant frequency PDRF. In cases where two or more potentially damaging resonant vibration frequencies PDRF are located rather close to each other, the phase difference threshold PDIFT is selected correspondingly smaller. Preferably, the predeterminable phase difference threshold PDIFT is 10%, preferably 5%, more preferably 2%, of the at least one candidate damaging resonant frequency.

The lock-on process, typically, takes less than one to a few periods of the frequency OOF of the oscillator output signals OOS1, OOS2. The time to lock-on, in particular, depends on an initial frequency IOOF of the oscillator output signals OOS1, OOS2. It will be appreciated that particularly rapid lock-on of the PLL device 111.2 to potentially damaging resonant frequencies PDRF is achieved, of course, if the initial frequency IOOF of the oscillator output signals OOS1, OOS2 is located as close as possible to the respective potentially damaging resonant frequency PDRF to be monitored.

Hence, in the present example, a predetermined candidate damaging resonant frequency CDRF previously identified for the mutual oscillation of the wheels 106.1 of the wheelset 106 is used as an initial frequency IOOF of the oscillator output signals OOS1, OOS2.

The QPLL device 111.2 of the present example has the great advantage that, due to its specific design with the phase shifted oscillator output signals OOS1, OOS2, it has a virtually unlimited lock-on frequency range, such that it enables monitoring of virtually any desired candidate damaging resonant frequency CDRF and related vibration state, respectively.

In the present example, the phase shift in the first oscillator output signal OOS1 and the second oscillator output signal OOHS2 is achieved by, initially, integrating an angular speed signal of the oscillator device 111.6. Subsequently, a sine function is applied to the integrated angular speed signal to obtain the periodic first oscillator output signal OOS1, while a cosine function is applied to the integrated angular speed signal to obtain the periodic second oscillator output signal OOHS2 having the desired quarter period phase shift PS to the first oscillator output signal OOS1 (i.e. being orthogonal to the first oscillator output signal OOS1).

Once it is determined that the QPLL device 111.2 has locked-on to the predominant vibration component PVC within the vibration signal VS, the oscillator output frequency OOF is set as the frequency PVCF of the predominant vibration component PVC in a determination unit 111.8. The frequency PVCF is then used in the further analyzing process.

In the present example, the phase detector device 111.4 further comprises an amplitude determination component 111.7 that generates an amplitude signal AS as a function of the vibration signal VS, the first oscillator output signal OOS1 and the second oscillator output signal OOS2. The amplitude signal AS is representative of the amplitude of the predominant vibration component PVC, which may be a potentially damaging vibration component.

In the present example, the amplitude signal AS = A(t) simply calculates as a component of equation (3), namely:

$$A(t) = \sqrt{k_s^2(t) + k_c^2(t)} \,. \tag{9}$$

The amplitude signal AS, together with a signal f(t) representative of the frequency PVCF, i.e.

$$f(t) = \frac{\omega(t)}{2\pi} \,, \tag{10}$$

is forwarded to the comparison device 111.3, where it is used to obtain corresponding amplitude information AI to be compared to a threshold amplitude information TAI.

It will be appreciated that, in the present example, it may be provided that the amplitude signal AS and the signal representative of the frequency PVCF are only processed in the comparison device 111.3 if the frequency PVCF has been qualified (e.g. in a corresponding part of the comparison device 111.3) as a potentially damaging resonant frequency PDRF. To this end, the frequency PVCF may be compared to one or more stored potentially damaging resonant frequencies PDRF assigned to one or more different resonant vibration scenarios.

In this comparison, the predominant vibration component is identified as a potentially damaging vibration component if a frequency difference between the frequency PVCF of the predominant vibration component PVC and a candidate damaging resonant frequency PDRF is below a predeterminable frequency difference threshold FDIFT.

The frequency difference threshold FDIFT may be any suitable frequency difference or acceptable frequency error, which allows proper assignment of the current predominant vibration component PVC to the respective potentially damaging resonant frequency PDRF. In cases where two or more potentially damaging resonant vibration frequencies PDRF are located rather close to each other, the frequency difference threshold FDIFT is selected correspondingly smaller. Preferably, the predeterminable frequency difference threshold PDIFT is 10%, preferably 5%, more preferably 2%, of the at least one candidate damaging resonant frequency PDRF.

The threshold amplitude information TAI, in the present example, is selected (e.g. from a look-up table or any other type of data base of the comparison device 111.3) as a function of the frequency PVCF of the predominant vibration component PVC determined by the QPLL device 111.2. The threshold amplitude information TAI has been previously determined for the respective resonant vibration scenario, i.e., in the present example, the wheels 106.1 oscillating with respect to each other about the wheelset axis.

The threshold amplitude information TAI is representative of the threshold amplitude of the mutual oscillation of the wheels 106.1 starting at which the mutual oscillation of the wheels 106.1 is classified as damaging to one or more components of the wheelset 106. In the present example, the most vulnerable component of the wheelset 106 is the wheelset shaft 106.2 and/or the press fit between the wheels 106.1 and the wheelset shaft 106.2. Hence, the threshold amplitude information TAI is representative of the amplitude of the mutual oscillation of the wheels 106.1 at the frequency PVCF, where damage starts within the wheelset shaft 106.2 and/or the press fit between the wheels 106.1 and the wheelset shaft 106.2.

The comparison device 111.3 receives the amplitude signal AS and the signal representative of the frequency PVCF, retrieves the threshold amplitude information TAI as a function of the frequency PVCF and compares the amplitude information AI (obtained from the amplitude signal AS) to the retrieved threshold amplitude information TAI. If it is determined that the amplitude of the amplitude information AI has reached or exceeded the amplitude of the retrieved threshold amplitude information TAI, presence of a potentially damaging resonant vibration state is identified.

As outlined above, with certain embodiments of the invention, such a further processing is carried out for any frequency PVCF and qualification as a damaging vibration component only is carried out via the comparison of the amplitude information AI of the predominant vibration component PVCF with the threshold amplitude information TAI. In these cases, the comparison device 111.3 stores (at a sufficiently fine resolution and in an appropriate frequency range of interest FROI) a threshold amplitude information TAI for any frequency within this range of interest FROI. The corresponding threshold amplitude TAI information is then selected as a function of the frequency PVCF of the predominant vibration component PVC and used in the comparison to identify presence of a potentially damaging resonant vibration state.

As a result of the fact that presence of a potentially damaging resonant vibration state is identified, the comparison device 111.3 issues a corresponding motor control signal MCS to a motor controller 112 of the control device 109. The motor controller 112, as a function of the motor control signal MCS, controls the traction converter device 108 to initiate a reaction to counteract the potentially damaging resonant vibration state. For example, the slip between wheels and rails can be reduced (which reduces the traction/braking effort rather indirectly) or the traction/braking effort can be reduced directly.

This counteraction, in the present example, takes place as a function of the specific damaging resonant vibration state identified and its circumstances. In particular, it takes place a function of the frequency PVCF of the predominant vibration component PVC. With certain preferred embodiments the counteraction may also take place as a function of the degree of deviation between the amplitude information AI and the threshold amplitude information TAI. Hence, for example, a more severe and/or rapid reaction may be initiated as a function of this degree of deviation.

In the present example, counteracting the potentially damaging resonant vibration state of the wheelset 106 comprises reducing the torque of the motor 105 driving the wheelset 106. In addition or as an alternative, a traction slip and/or a traction force between the wheelset 106 and the track T contacted by the wheel set may be reduced in the course of this counteracting process.

In the present example, after the counteraction, the frequency PVCF of the predominant vibration component PVC is subsequently set, in the analyzing device 111, as the candidate damaging resonant frequency CDRF (i.e. replaces the previously stored candidate damaging resonant frequency CDRF associated to the specific potentially damaging resonant vibration state). Hence, in a very simple manner, the system has the ability to account for and follow, respectively, alterations of the respective potentially damaging resonant frequency PDRF, which may occur over time, e.g. due to wear of the wheels 106.1 or ageing effects of other components of the wheelset 106.

It will be appreciated in this context that the initial value of the candidate damaging resonant frequency CDRF (or potentially damaging resonant frequency PDRF), which may also be used as the initial frequency IOOF of the oscillator output signals OOS1, OOS2, depends on the mechanical properties of the wheelset 106, in particular, the masses, material properties, and the geometry of the components of the wheelset 106.

The initial value of the candidate damaging resonant frequency CDRF may be easily determined for the wheelset 106 by measurement and/or simulation. The same applies to a new initial value of the candidate damaging resonant frequency CDRF, which may have to be set as a result of a maintenance action carried out on the wheelset 106, such as e.g. re-profiling of the wheels 106.1. Preferably, a plausibility check is executed before finally setting the initial value of the candidate damaging resonant frequency CDRF.

The system as described above has the great advantage that, unlike in the known systems, the QPLL device 111.2 may provide identification of the frequency PVCF of the predominant vibration component PVC within very few periods of the vibration, in many cases within less than one single period of the vibration. Hence, very rapid reaction is possible to such potentially damaging vibration states which, typically, come into existence for only a few hundredths of a second.

A further advantage lies within the fact that the QPLL device 111.2 has not to be optimized for a very narrow frequency band. Rather, the QPLL device 111.2 has a very broad lock-on frequency range, such that optimum and rapid reaction to resonant vibration state may be achieved at any time.

The broad lock-on frequency range of the QPLL device 111.2 has the further advantage that the control arrangement 102 may be used to monitor different candidate damaging resonant frequencies CDRF either of the wheelset 106 itself or of components thereof as well as to monitor different other resonant vibration scenarios (as outlined above) within the bogie 104 which have different resonant vibration states (at other resonant frequencies) that may be identified using the vibration signal VS.

If, for example, a significant level of vibration is detected out of the bandwidth of known resonance scenarios, the presence of a motor failure may be taken into account (as outlined above) and appropriate countermeasures may be taken (e.g. shut down of the motor, emergency braking etc.).

It will be appreciated that the (time consuming) determination of the absolute value of the amplitude information AI in the amplitude determination component 111.7 may be omitted. In this case, the threshold amplitude information TAI simply has to be adapted accordingly.

It will be further appreciated that the oscillator output frequency OOF may be immediately used as the frequency PVCF (i.e. without the transformation in the determination unit 111.8).

Second and Third Embodiment

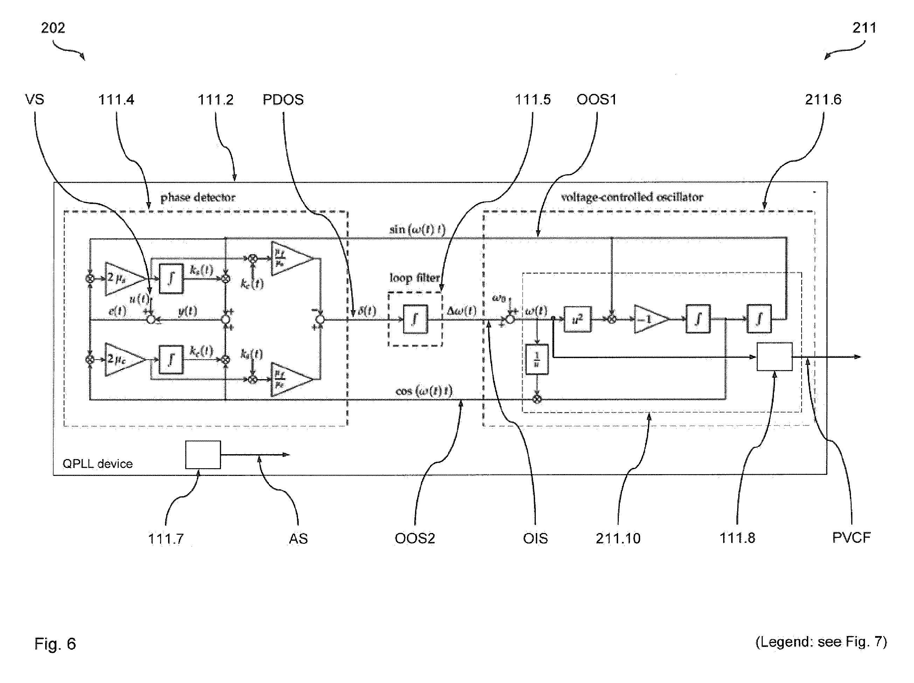

Further preferred embodiment of a control arrangement 202 and 302, respectively, according to the invention will now be described in detail with reference to Figure 1 to 4 and 6 or 7, respectively. The control arrangement 202 and 302, in its basic design and functionality, largely corresponds to control arrangement 102 and either one may replace the control arrangement 102 in the vehicle 101 such that it will be mainly referred to the differences only. Moreover, like components are given the same reference numerals increased by 100 or 200, respectively. Unless deviating explanations are given in the following it is here explicitly referred to the explanations given above with respect to the features and functions of these components.

The only difference of the control arrangement 202 with respect to the control arrangement 101 lies in the design of the adjustable oscillator device 211.6 of the QPLL device 211.2. In this example, very rapid generation of the first oscillator output signal OOS1 and the second oscillator output signal OOS2 is achieved in that the oscillator device generates a angular speed oscillator signal ASOS input into a feedback oscillator circuit 211.10 of the oscillator device 211.6. The feedback oscillator circuit 211.10, as a function of the periodic oscillator signal POS, generates the first oscillator output signal OOS1 and the orthogonal second oscillator output signal OOS2 having the desired quarter period phase shift PS to the first oscillator output signal OOS1.

The use of the feedback oscillator circuit 211.10 has the advantage that generation of the first oscillator output signal OOS1 and the second oscillator output signal OOS2 requires less operating resources (than the use of the sine and cosine functions of Figure 5), such that, in a very simple way, a more rapid and less resource consuming, respectively, lock-on of the QPLL device 211.2 and, hence, a more rapid reaction to resonant vibration states may be achieved.

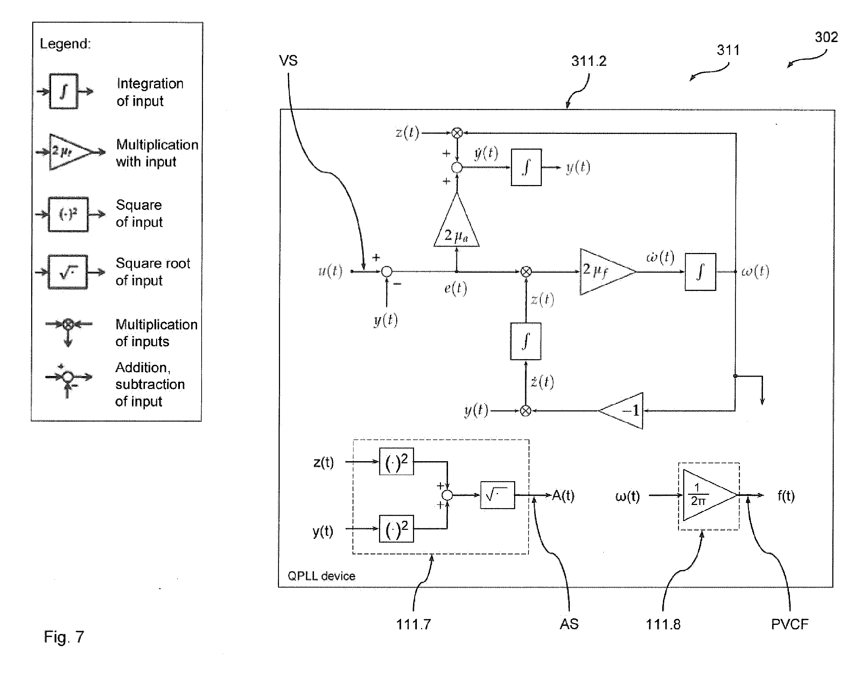

The difference of the control arrangement 302 shown in Figure 7 with respect to the control arrangement 101 lies in the different design of the QPLL device as a modified QPLL device 311.2 which additionally includes a coordinate transformation as follows:

$$z(t) := k_s(t) \cdot \cos \Phi(t) - k_c(t) \cdot \sin \Phi(t) = \sqrt{k_s^2(t) + k_c^2(t)} \cdot \cos\left[\Phi(t) + \arctan\left(\frac{k_c(t)}{k_s(t)}\right)\right]. \quad (11)$$

Hence, with equation (11), the dynamic equation system (5) to (8) is modified into:

$$\dot{y}(t) = 2\mu_a \cdot \left[u(t) - y(t)\right] + \omega(t) \cdot z(t), \quad (12)$$

$$\dot{z}(t) = -\omega(t) \cdot y(t), \quad (13)$$

$$\dot{\omega}(t) = 2\mu_f \cdot \left[u(t) - y(t)\right] \cdot z(t), \quad (14)$$

$$\dot{\Phi}(t) = \omega(t), \quad (15)$$

with $\mu_a$ and $\mu_f$ again being tuning parameters specifically tuned to the respective mechanical system. Since z(t) and y(t) are orthogonal, in the present example, the amplitude signal AS = A(t) simply calculates as:

$$A(t) = \sqrt{y^2(t) + z^2(t)} \, . \qquad\qquad (16)$$

The use of the coordinate transformation has the advantage that the need for operating resources is further reduced (since neither trigonometric functions nor phase information are needed any more), such that, in a very simple way, a simpler controller layout with more rapid reaction to resonant vibration states may be achieved.

While the basic layout of the QPLL device 311.2 is further simplified, for stability reasons, higher quality integration algorithms are used (such as e.g. Adams-Bashforth of second or higher order).

Although the present invention, in the foregoing, has only been described for a resonant vibration scenario of a wheelset of the vehicle, it will be appreciated that, as outlined above, it may basically be used for such resonant vibration scenarios of arbitrary mechanical devices that may undergo one or more such potentially damaging resonant vibration states at given resonant frequencies.

Hence, with certain further embodiments of the invention, the vibration signal VS may be used to monitor a relative vibration between the rotor 105.1 of the motor 105 and the wheelset 106. In these cases, resonant vibration may, for example, be hazardous to the components of the torque transmission (such as shafts, gears etc).

Furthermore, with certain embodiments of the invention, the vibration signal VS used to monitor a relative vibration between the motor 105 and the wheelset 106. In these cases, resonant vibration may, for example, be hazardous to the components of the torque transmission (such as shafts, gears etc) as well as to the torque support components and/or suspension components of the motor 105.

Furthermore, with certain embodiments of the invention, a first drive unit and a second drive unit (such as any two of the motors 105 or the two bogies 104) are electrically driven by the common traction converter unit 108, and an appropriate vibration signal VS may be used for monitoring a relative vibration between the first drive unit and the second drive unit. Furthermore, with certain embodiments of the invention, the vibration signal VS is used to monitor a vibration caused by a pulsating torque generated by the motor 105, in particular, as a result of a short-circuited component of the drive motor. Such potentially damaging vibration may, in particular, develop if the motor 105 is a permanent magnet motor where short-circuited electric components lead to such a pulsating torque characteristic. It will be appreciated, however, that such a pulsating torque characteristic may basically develop in any rotating field machine, such that the invention may be used here as well.

Here, the potentially damaging resonant frequency PDRF (of the potentially damaging resonant vibration state) in the sense of the present invention is the characteristic frequency of the pulsating torque (or a harmonic thereof), which in turn is a function of the rotating speed of the motor 105. Detection of such a potentially damaging resonant vibration state may, in particular, be used to detect such short-circuiting situations in such electric motors 105.

Although the present invention, in the foregoing, has only been described for a single rail vehicle, it will be appreciated that it may basically be used for train sets of any desired number of vehicles.

Finally, although the present invention in the foregoing has only been described in the context of a rail vehicle, it will be appreciated that it may also be applied to any other type of mechanical arrangement in order to overcome similar problems with respect to detecting and counteracting potentially damaging resonant vibration states.

**Claims**

1. A method for identifying presence of at least one potentially damaging resonant vibration state of a mechanical device, in particular, a component of a rail vehicle, comprising

   - capturing at least one vibration signal representative of a current vibration state of said mechanical device (104),
   - analyzing said at least one vibration signal for determining presence of at least one potentially damaging vibration component within said at least one vibration signal and for determining an amplitude information representative of an amplitude of said at least one potentially damaging vibration component, and
   - comparing said amplitude information of said at least one potentially damaging vibration component to a threshold amplitude information previously determined for said least one potentially damaging vibration component to identify presence of said potentially damaging resonant vibration state;

   **characterised in that**

   - said analyzing said at least one vibration signal comprises using a phase-locked loop device (111.2; 211.2; 311.2) for identifying a frequency of a predominant vibration component within said at least one vibration signal.

2. The method according to claim 1, wherein

- said threshold amplitude information is selected as a function of said at least one potentially damaging vibration component, said threshold amplitude information, in particular, being selected as a function of said at least one candidate damaging resonant frequency;

and/or

- said frequency of said predominant vibration component is compared with at least one candidate damaging resonant frequency previously determined for said mechanical device (104) to identify if said predominant vibration component represents said at least one potentially damaging vibration component,

and/or

- at least in case of qualification of said predominant vibration component as said at least one potentially damaging vibration component, an amplitude information of said predominant vibration component is compared with said threshold amplitude information to identify presence of said potentially damaging resonant vibration state.

3. The method according to claim 1 or 2, wherein

- said phase-locked loop device (111.2, 211.2; 311.2) comprises a phase detector device (111.4), a loop filter device (111.5) and an adjustable oscillator device (111.6; 216.6);
- said adjustable oscillator device (111.6; 216.6), as a function of an oscillator input signal, providing at least one oscillator output signal having a defined oscillator output frequency,
- said at least one vibration signal and said at least one oscillator output signal being input into said phase detector;
- said phase detector, as a function of said at least one vibration signal and said at least one oscillator output signal, generating a phase detector output signal, said phase detector output signal being representative of a phase difference between said at least one vibration signal and said at least one oscillator output signal and being input into said loop filter device (111.5);
- said loop filter device (111.5), as a function of said phase detector output signal, generating a loop filter output signal input into said oscillator device (111.6; 216.6) as said oscillator input signal to reduce said phase difference between said at least one vibration signal and said at least one oscillator output signal;
- a frequency of said oscillator output signal, after said phase difference has fallen below a predeterminable phase difference threshold, being used as said frequency of said predominant vibration component.

4. The method according to claim 3, wherein

- said phase-locked loop device (111.2, 211.2; 311.2) is configured as a quadrature phase-locked loop device;
- said adjustable oscillator device (111.6; 216.6), as a function of said oscillator input signal, providing at least a first oscillator output signal and a second oscillator output signal;
- said first oscillator output signal and said second oscillator output signal having said defined oscillator output frequency and a defined phase shift, in particular a phase shift of a quarter period;
- said at least one vibration signal, said first oscillator output signal and said second oscillator output signal being input into said phase detector device (111.4);
- said phase detector device (111.4), as a function of said at least one vibration signal, said first oscillator output signal and said second oscillator output signal, generating said phase detector output signal representative of said phase difference between said at least one vibration signal and said at least one oscillator output signal and being input into said loop filter device (111.5).
- said phase detector device (111.4), as a function of said at least one vibration signal, said first oscillator output signal and said second oscillator output signal, in particular, generating an amplitude signal representative of said amplitude of said at least one potentially damaging vibration component.

5. The method according to claim 4, wherein

- said adjustable oscillator device (111.6) generates an angular speed oscillator signal and integrates said angular speed signal, said adjustable oscillator device (111.6) applies a sine function to said integrated angular speed signal to obtain said first oscillator output signal, and said adjustable oscillator device (111.6) applies a cosine function to said integrated angular speed signal to obtain said second oscillator output signal having said phase shift to said first oscillator output signal;

or

- said adjustable oscillator device (216.6) generates an angular speed oscillator signal input into a feedback oscillator circuit of said adjustable oscillator device (216.6); said feedback oscillator circuit, as a function of said angular speed oscillator signal, generating said first oscillator output signal and said second oscillator output signal having said phase shift to said first oscillator output signal.

6. The method according to one of claims 1 to 5, wherein

- a predetermined frequency previously identified for said mechanical device (104) is used as an initial frequency of said oscillator output signal;
- said at least one candidate damaging resonant frequency, in particular, being set as said initial frequency of said oscillator output signal;
- said predominant vibration component, in particular, being identified as a potentially damaging vibration component if a frequency difference between said frequency of said predominant vibration component and said at least one candidate damaging resonant frequency is below a predeterminable frequency difference threshold, and said frequency of said predominant vibration component being subsequently set as said at least one candidate damaging resonant frequency;
- said predeterminable frequency difference threshold, in particular, being 10%, preferably 5%, more preferably 2%, of said at least one candidate damaging resonant frequency.

7. The method according to one of claims 1 to 6, wherein

- said phase-locked loop device (311.2) is configured as a modified quadrature phase-locked loop device using a coordinate transformation eliminating the use of trigonometric functions and/or phase information, said modification, in particular, being achieved using a coordinate transformation as follows:

$$z(t) := k_s(t) \cdot \cos \Phi(t) - k_c(t) \cdot \sin \Phi(t) ,$$

wherein $\phi(t)$ is a rotating angle information of a component of said mechanical device;

and/or

- said vibration signal is filtered by an initial filter device (111.1) prior to being fed to said phase-locked loop device (111.2, 211.2, 311.2);

and/or

- said loop filter device (111.5) is an integrator device;

and/or

- said at least one vibration signal is captured using a motion sensor device (110), in particular, an acceleration sensor device and/or a rotational speed sensor device, and/or a stress sensor device and/or a strain sensor device;

wherein

- said initial filter device (111.1), in particular, is a band pass filter device;
- said initial filter device (111.1), in particular, is a band pass filter device of first or second order;
- said initial filter device (111.1), in particular, is a band pass filter device having a lower cut-off frequency of less than 35 Hz, preferably 10 Hz to 25 Hz, more preferably 15 Hz to 20 Hz, and/or having an upper cut-off frequency of above 100 Hz, preferably above 150 Hz, more preferably 200 Hz to 250 Hz;

- a smallest potentially damaging resonant vibration frequency and a largest potentially damaging resonant vibration frequency, in particular, define a frequency band of interest and said initial filter device (111.1) is a band pass filter device having a lower cut-off frequency of less than 75%, preferably less than 60%, more preferably 40% to 50%, of said smallest potentially damaging resonant vibration frequency, and/or having an upper cut-off frequency of above 150%, preferably above 200%, more preferably 250% to 400%, of said largest potentially damaging resonant vibration frequency;

- said loop filter device (111.5), in particular, provides a loop filter output signal representative of a phase difference between said vibration signal and an oscillator output of an adjustable oscillator device (111.6; 216.6) of said phase-locked loop device (111.2, 211.2; 311.2).

8. The method according to one of claims 1 to 7, wherein

- said mechanical device (104) comprises a drive motor (105) and a wheel unit (106) driven by said drive motor (105), said vibration signal being representative of a relative vibration between a rotor of said drive motor (105) and said wheel unit (106);

and/or

- said mechanical device (104) comprises a drive motor (105) and a wheel unit (106) driven by said drive motor (105), said vibration signal being representative of a relative vibration between said drive motor (105) and said wheel unit (106);

and/or

- said mechanical device (104) comprises a wheel unit (106) having two wheels (106.1) mechanically coupled to each other by a coupling device (106.2), in particular, a wheel unit shaft, said vibration signal being representative of a relative vibration between said wheels (106.1), in particular, a torsional vibration of said wheel unit shaft (106.2);

and/or

- said mechanical device (104) comprises a first drive unit (105) and a second drive unit (105) electrically driven by a common converter unit (108), said vibration signal being representative of a relative vibration between said first drive unit (105) and said second drive unit (105);

and/or

- said mechanical device (104) comprises an electric drive motor (105), said vibration signal being representative of a vibration caused by a pulsating torque generated by said drive motor (105), in particular, as a result of a short-circuited component of said drive motor (105).

9. A method for reacting to a presence of at least one potentially damaging resonant vibration state of a mechanical device (104), in particular, a component of a rail vehicle, comprising

- identifying presence of said at least one potentially damaging resonant vibration state of said mechanical device (104) using a method according to one of claims 1 to 8, and
- counteracting said at least one potentially damaging resonant vibration state;
- said counteracting said at least one potentially damaging resonant vibration state, in particular, comprising reducing a torque of a drive motor (105) driving said mechanical device (104) and/or reducing a traction slip and/or a traction force between a drive unit forming said mechanical device (104) and a track contacted by said drive unit.

10. A control arrangement for identifying presence of at least one potentially damaging resonant vibration state of a mechanical device (104), in particular, a component of a rail vehicle, comprising

- a capturing device (110) and an analyzing device (111; 211; 311);
- said capturing device (110) being configured to capture at least one vibration signal representative of a current vibration state of said mechanical device (104),

- said analyzing device (111; 211; 311) being connected to said capturing device (110)
- said analyzing device (111; 211; 311) being configured to analyze said at least one vibration signal for determining presence of at least one potentially damaging vibration component within said at least one vibration signal
- said analyzing device (111; 211; 311) being configured to determine an amplitude information representative an amplitude of said at least one potentially damaging vibration component, and
- said analyzing device (111; 211; 311) being configured to compare said amplitude information of said at least one potentially damaging vibration component to a threshold amplitude information previously determined for said least one potentially damaging vibration component to identify presence of said potentially damaging resonant vibration state;

**characterised in that**

- said analyzing device (111; 211; 311), for analyzing said at least one vibration signal, comprises a phase-locked loop device (111.2, 211.2; 311.2) for identifying a frequency of a predominant vibration component within said at least one vibration signal.

11. The control arrangement according to claim 10, wherein

- said phase-locked loop device (111.2, 211.2; 311.2) comprises a phase detector device (111.4), a loop filter device (111.5) and an adjustable oscillator device (111.6; 216.6);
- said adjustable oscillator device (111.6; 216.6), as a function of an oscillator input signal, providing at least one oscillator output signal having a defined oscillator output frequency,
- said at least one vibration signal and said at least one oscillator output signal being input into said phase detector;
- said phase detector, as a function of said at least one vibration signal and said at least one oscillator output signal, generating a phase detector output signal, said phase detector output signal being representative of a phase difference between said at least one vibration signal and said at least one oscillator output signal and being input into said loop filter device (111.5);
- said loop filter device (111.5), as a function of said phase detector output signal, generating a loop filter output signal input into said oscillator device (111.6; 216.6) as said oscillator input signal to reduce said phase difference between said at least one vibration signal and said at least one oscillator output signal;
- a frequency of said oscillator output signal, after said phase difference has fallen below a predeterminable phase difference threshold, being used as said frequency of said predominant vibration component;
- said phase-locked loop device (111.2, 211.2; 311.2), in particular, being configured as a quadrature phase-locked loop device;
- said adjustable oscillator device (111.6; 216.6), as a function of said oscillator input signal, in particular, providing at least a first oscillator output signal and a second oscillator output signal;
- said first oscillator output signal and said second oscillator output signal having said defined oscillator output frequency and a defined phase shift, in particular a phase shift of a quarter period;
- said at least one vibration signal, said first oscillator output signal and said second oscillator output signal being input into said phase detector device (111.4);
- said phase detector device (111.4), as a function of said at least one vibration signal, said first oscillator output signal and said second oscillator output signal, generating said phase detector output signal representative of said phase difference between said at least one vibration signal and said at least one oscillator output signal and being input into said loop filter device (111.5).
- said phase detector device (111.4), as a function of said at least one vibration signal, said first oscillator output signal and said second oscillator output signal, in particular, generating an amplitude signal representative of said amplitude of said at least one potentially damaging vibration component.
- said adjustable oscillator device (111.6; 216.6), in particular, generating a periodic oscillator signal and integrates said periodic signal, said adjustable oscillator device (111.6; 216.6) applies a sine function to said integrated periodic signal to obtain said first oscillator output signal, and said adjustable oscillator device (111.6; 216.6) applies a cosine function to said integrated periodic signal to obtain said second oscillator output signal having said phase shift to said first oscillator output signal; or said adjustable oscillator device (111.6; 216.6), in particular, generating a periodic oscillator signal input into a feedback oscillator circuit of said adjustable oscillator device (111.6; 216.6); said feedback oscillator circuit, as a function of said periodic oscillator signal, generating said first oscillator output signal and said second oscillator output signal having said phase shift to said first oscillator output signal.

12. The control arrangement according to claim 10 or 11, wherein

- said adjustable oscillator device (111.6; 216.6) is configured to use a predetermined frequency previously identified for said mechanical device (104) as an initial frequency of said oscillator output signal;
- said at least one candidate damaging resonant frequency, in particular, being set as said initial frequency of said oscillator output signal;
- said analyzing device (111; 211; 311), in particular, being configured to identify said predominant vibration component as a potentially damaging vibration component if a frequency difference between said frequency of said predominant vibration component and said at least one candidate damaging resonant frequency is below a predeterminable frequency difference threshold, and said frequency of said predominant vibration component being subsequently set as said at least one candidate damaging resonant frequency;
- said predeterminable frequency difference threshold, in particular, being 10%, preferably 5%, more preferably 2%, of said at least one candidate damaging resonant frequency.

13. The control arrangement according to one of claims 10 to 12, wherein

- said analyzing device (111; 211; 311) is configured to compare said frequency of said predominant vibration component with at least one candidate damaging resonant frequency previously determined for said mechanical device (104) to identify if said predominant vibration component represents said at least one potentially damaging vibration component,

and/or

- said analyzing device (111; 211; 311) is configured to compare, at least in case of qualification of said predominant vibration component as said at least one potentially damaging vibration component, an amplitude of said predominant vibration component with said threshold amplitude to identify presence of said potentially damaging resonant vibration state,

and/or

- said phase-locked loop device (311.2) is configured as a modified quadrature phase-locked loop device using a coordinate transformation eliminating the use of trigonometric functions;

and/or

- an initial filter device (111.1) is provided and configured to filter said vibration signal prior to being fed to said phase-locked loop device (111.2, 211.2; 311.2);

and/or

- a loop filter device (111.5) of said phase-locked loop device (111.2, 211.2; 311.2) is configured as an integrator device;

and/or

- said capturing device (110) comprises a motion sensor device, in particular, an acceleration sensor device and/or a rotational speed sensor device, and/or a stress sensor device and/or a strain sensor device;

wherein

- said threshold amplitude information, in particular, is selected as a function of said at least one potentially damaging vibration component, said threshold amplitude, in particular, being selected as a function of said at least one candidate damaging resonant frequency.
- said initial filter device (111.1), in particular, is a band pass filter device;
- said initial filter device (111.1), in particular, is a band pass filter device of first or second order;
- said initial filter device (111.1), in particular, is a band pass filter device having a lower cut-off frequency of less than 35 Hz, preferably 10 Hz to 25 Hz, more preferably 15 Hz to 20 Hz, and/or having an upper cut-off frequency of above 100 Hz, preferably above 150 Hz, more preferably 200 Hz to 250 Hz;
- a smallest potentially damaging resonant vibration frequency and a largest potentially damaging resonant vibration frequency, in particular, define a frequency band of interest and said initial filter device (111.1), in particular, is a band pass filter device having a lower cut-off frequency of less than 75%, preferably less than 60%, more preferably 40% to 50%, of said smallest potentially damaging resonant vibration frequency, and/or having an upper cut-off frequency of above 150%, preferably above 200%, more preferably 250% to 400%, of said largest potentially damaging resonant vibration frequency;

- said loop filter device (111.5), in particular, provides a loop filter output signal representative of a phase difference between said vibration signal and an oscillator output of an adjustable oscillator device (111.6; 216.6) of said phase-locked loop device (111.2, 211.2; 311.2).

**14.** A mechanical arrangement, in particular, a vehicle, preferably a rail vehicle, comprising a mechanical device (104) and a control arrangement according to one of claims 10 to 13, wherein

- said mechanical device (104), in particular, comprises a drive motor (105) and a wheel unit (106) driven by said drive motor (105), said vibration signal being representative of a relative vibration between a rotor of said drive motor (105) and said wheel unit (106);

and/or

- said mechanical device (104), in particular, comprises a drive motor (105) and a wheel unit (106) driven by said drive motor (105), said vibration signal being representative of a relative vibration between said drive motor (105) and said wheel unit (106);

and/or

- said mechanical device (104), in particular, comprises a wheel unit (106) having two wheels mechanically coupled to each other by a coupling device, in particular, a wheel unit shaft, said vibration signal being representative of a relative vibration between said wheels, in particular, a torsional vibration of said wheel unit shaft;

and/or

- said mechanical device (104), in particular, comprises a first drive unit and a second drive unit electrically driven by a common converter unit, said vibration signal being representative of a relative vibration between said first drive unit and said second drive unit;

and/or

- said mechanical device (104), in particular, comprises an electric drive motor (105), said vibration signal being representative of a vibration caused by a pulsating torque generated by said drive motor (105), in particular, as a result of a short-circuited component of said drive motor (105).

**15.** The mechanical arrangement according to claim 14, wherein

- said control arrangement (102; 202; 302) is configured to identify presence of said at least one potentially damaging resonant vibration state of said mechanical device (104), and
- said control arrangement (102; 202; 302) is configured to counteract said at least one potentially damaging resonant vibration state;
- said control arrangement (102; 202; 302), when counteracting said at least one potentially damaging resonant vibration state, in particular, reducing a torque of a drive motor (105) driving said mechanical device (104) and/or reducing a traction slip and/or a traction force between a drive unit forming said mechanical device (104) and a track contacted by said drive unit.

Fig. 1

Fig. 2

102

111.1   111   111.2   109   111.3   112

VS →

initial
filter
device

QPLL
device

comparison
device

motor
controller
device

→

analyzing device

control device

VS        AS, PVCF        MCS

Fig. 3

111

PDOS        111.2        OOS2   OIS

$\cos\left(\omega_{\mathrm{ref}} + \Delta\omega(t)\right)$

111.4

111.6

$A_0 \sin(\omega_0 t)$

$\dfrac{\mathrm{d}}{\mathrm{d}t}\Delta\omega(t)$

PD

$\int$

$\Delta\omega(t)$

VCO

VS

$\Delta\omega(t)$

PVCF

$\sin\left(\omega_{\mathrm{ref}} + \Delta\omega(t)\right)$

111.5

OOS1

OOS2

amplitude
determination
component

QPLL device

VS        AS        OOS1

Fig. 4

Fig. 5

(Legend: see Fig. 7)

Fig. 6

(Legend: see Fig. 7)

Legend:

$\int$ — Integration of input

$2\mu_f$ — Multiplication with input

$(\cdot)^2$ — Square of input

$\sqrt{\phantom{x}}$ — Square root of input

$\otimes$ — Multiplication of inputs

— Addition, subtraction of input

Fig. 7

Europäisches
Patentamt

European
Patent Office

Office européen
des brevets

**EUROPEAN SEARCH REPORT**

Application Number

EP 14 16 6626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 400 578 A (FRAREY JOHN L ET AL) 10 September 1968 (1968-09-10) * figure 1 * * column 1, lines 11-22 * * column 2, lines 45-48 * * column 3, lines 1-20 * * column 3, lines 47-55 * * column 6, lines 13-66 * * column 7, lines 58-72 * * column 8, line 67 - column 9, line 20 * | 1-3,6,7, 12,13 | INV. G01H1/00 B61K9/04 G01M15/00 G05B23/02 |
| X | US 4 977 395 A (BOZEMAN JR RICHARD J [US]) 11 December 1990 (1990-12-11) * abstract; figures 1-3 * * column 1, line 54 - column 2, line 18 * * column 3, lines 9-42 * * column 4, line 17 - column 5, line 49 * * claim 1 * | 1-3,7,13 | |
| A | US 2011/148110 A1 (EGEDAL PER [DK] ET AL) 23 June 2011 (2011-06-23) * abstract; figures 1,6,8 * * paragraphs [0022], [0029], [0035], [0036], [0046] * | 1,10 | TECHNICAL FIELDS SEARCHED (IPC) G01H G01M |
| A | US 2007/250294 A1 (OMATA SADAO [JP] ET AL) 25 October 2007 (2007-10-25) * abstract; figure 2 * * paragraphs [0001], [0086], [0087], [0109], [0127], [0134] * | 1,10 | G01N B61K G05B |

~~The present search report has been drawn up for all claims~~

| Place of search | Date of completion of the search | Examiner |
|---|---|---|
| The Hague | 24 October 2014 | de Jong, Frank |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-3, 6, 10, 12(completely); 7, 13(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 14 16 6626

The Search Division considers that the present European patent application does not comply with the requirements of unity of invention and relates to several inventions or groups of inventions, namely:

1. claims: 1-3, 6, 10, 12(completely); 7, 13(partially)

   Method for identifying a vibration from the amplitude of a PLL-tracked predominant vibration frequency, wherein the threshold is set as a function of frequency
   ---

2. claims: 4, 5, 11(completely); 7, 13(partially)

   Method for identifying a vibration from the amplitude of a PLL-tracked predominant vibration frequency, wherein the PLL circuit is a quadrature PLL circuit
   ---

3. claims: 7, 13(all partially)

   Method for identifying a vibration from the amplitude of a PLL-tracked predominant vibration frequency, wherein a motion sensor captures a vibration signal
   ---

4. claims: 8, 14

   Method for identifying a vibration from the amplitude of a PLL-tracked predominant vibration frequency, wherein the mechanical device is a drive motor or wheel unit
   ---

5. claims: 9, 15

   Method for identifying a vibration from the amplitude of a PLL-tracked predominant vibration frequency, wherein the potentially damaging vibration state is counteracted
   ---

**ANNEX TO THE EUROPEAN SEARCH REPORT**
**ON EUROPEAN PATENT APPLICATION NO.**                    EP 14 16 6626

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2014

| Patent document cited in search report | | Publication date | Patent family member(s) | | Publication date |
|---|---|---|---|---|---|
| US 3400578 | A | 10-09-1968 | NONE | | |
| US 4977395 | A | 11-12-1990 | NONE | | |
| US 2011148110 | A1 | 23-06-2011 | AT | 514985 T | 15-07-2011 |
| | | | CA | 2696189 A1 | 19-02-2009 |
| | | | CN | 101779170 A | 14-07-2010 |
| | | | DK | 2179337 T3 | 10-10-2011 |
| | | | EP | 2179337 A1 | 28-04-2010 |
| | | | ES | 2368584 T3 | 18-11-2011 |
| | | | US | 2011148110 A1 | 23-06-2011 |
| | | | WO | 2009021900 A1 | 19-02-2009 |
| US 2007250294 | A1 | 25-10-2007 | JP | 4822438 B2 | 24-11-2011 |
| | | | US | 2007250294 A1 | 25-10-2007 |
| | | | WO | 2005100951 A1 | 27-10-2005 |

EPO FORM P0459

For more details about this annex : see Official Journal of the European Patent Office, No. 12/82

# EP 2 940 440 A1

**Patent documents cited in the description**

- EP 1473485 A2
- EP 0195249 B1
- DE 4435775 A1
- DE 3929497 C2
- WO 02091578 A2